# EUROPEAN PATENT APPLICATION

(11) **EP 4 810 554 A1**
(43) Date of publication of application: **23.09.2026**
(21) Application number: 24890830.3
(22) Date of filing: 15.11.2024
(51) Int. Cl.: C08K 5/375, C08K 5/134, C08L 9/08, C09K 15/08

(54) **AQUEOUS EMULSION ANTIOXIDANT, PREPARATION METHOD THEREFOR, AND USE THEREOF**

(30) Priority: 17.11.2023 CN 202311537237
(71) Applicant: Rianlon Corporation, Tianjin 300480 (CN)
(72) Inventor: YIN, Fangfang, Tianjin 300480 (CN); GUO, Shuzhen, Tianjin 300480 (CN); GUO, Fuqi, Tianjin 300480 (CN); LIU, Wenqi, Tianjin 300480 (CN); LUO, Hai, Tianjin 300480 (CN)
(74) Representative: Grünecker Patent- und Rechtsanwälte PartG mbB
(86) International application number: PCT/CN2024/132400
(87) International publication number: WO 2025/103478

(57) **Abstract**

The present invention provides an efficient aqueous emulsion antioxidant, a preparation method therefor, and a use thereof. The efficient aqueous emulsion antioxidant comprises an oil-soluble antioxidant, an emulsifier, a defoaming agent, and water, wherein the emulsifier is an anionic surfactant, a nonionic surfactant, and/or a colloid-protecting composition. The beneficial effects of the present invention lie in: the efficient aqueous emulsion antioxidant of the present invention has good compatibility with an emulsion-polymerized polymer by utilizing the synergistic effect of the emulsifier, the anti-aging performance is good, the effective utilization rate of the emulsion antioxidant is high, the stability is high, and the emulsion antioxidant can be stored for a long time. The efficient aqueous emulsion antioxidant of the present invention is an environmentally friendly aqueous product, avoids dust pollution and explosion risks caused by direct addition of a solid antioxidant, the problem of conventional liquid antioxidants having poor compatibility with emulsion-polymerized polymer systems, and the resource utilization rate is improved.

## Description

### Technical Field

The present disclosure belongs to the technical field of fine chemicals, and specifically relates to an aqueous emulsion antioxidant, a preparation method therefor, and a use thereof.

### Background Art

Emulsion polymerization is a process in which monomers are dispersed in water to form an emulsion with the aid of emulsifier and mechanical stirring, followed by the addition of an initiator to initiate monomer polymerization. Polymers prepared by emulsion polymerization mainly include latex and products thereof (including but not limited to natural latex, nitrile latex, styrene-butadiene latex, styrene-butadiene-pyridine latex, neoprene latex, isoprene latex, natural latex, etc.), emulsion-polymerized rubber (including but not limited to emulsion-polymerized styrene-butadiene rubber, nitrile rubber, chloroprene rubber, etc.), and other polymers containing specific functional groups (including but not limited to ABS, ASA, MBS, polymethacrylates and copolymers thereof, polyvinyl chloride, polyvinyl acetate and copolymers thereof, polytetrafluoroethylene, etc.). Millions of tons of polymers are produced annually by emulsion polymerization worldwide, making emulsion polymerization increasingly important for polymer production.

However, during synthesis, processing, transportation, storage, and use, polymers produced by emulsion polymerization are inevitably subjected to the effects of oxygen, light, heat, and mechanical stress, generating free radicals and undergoing aging degradation. Therefore, antioxidants are added before use. Most conventional antioxidants are oil-soluble products, which have poor compatibility with water and low effective utilization. Moreover, as environmental standards become more stringent, aqueous antioxidants are gradually gaining favor.

Currently, aqueous antioxidant products on the market are mainly prepared using solid antioxidants, which limits the use of liquid antioxidants in aqueous systems. Therefore, it is imperative to develop a preparation process that can produce aqueous antioxidant products using either solid or liquid antioxidants. Furthermore, aqueous antioxidants intended for use with polymers produced by emulsion polymerization have relatively large particle sizes. Coupled with the fact that the amount of antioxidant added is at the level of a few parts per thousand, the coverage of the antioxidant is low, which is detrimental to the ability of the aqueous antioxidant to enter the polymer micelles and achieve targeted protection of the polymer, severely affecting the anti-aging effect. Hence, developing an emulsion antioxidant that has small particle size and fast mobility, and that is capable of entering polymer micelles to target and prevent polymer aging, and improving antioxidant coverage is particularly important. Additionally, conventional aqueous emulsion antioxidants have poor stability, being prone to delamination, sedimentation, oil floatation, etc., which is detrimental to use and long-term storage. Therefore, preparing emulsion antioxidants with high stability is very important for their use in polymers produced by emulsion polymerization.

### Summary of the Invention

One primary object of the present disclosure is to provide an aqueous emulsion antioxidant with small particle size, high stability, long storage time, and good anti-aging performance, a preparation method therefor, and use thereof.

In a first aspect, the present application provides an aqueous emulsion antioxidant, comprising oil-soluble antioxidant, emulsifier, defoaming agent, and water;
the oil-soluble antioxidant comprises at least one compound represented by Formula I; 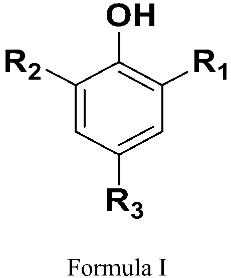 wherein:
R₁ is C₁-C₄ alkyl;
R₂ and R₃ are each independently selected from one of C₁-C₄ alkyl, -CH₂-S-R₄, or -CH₂-CH₂-COO-R₄;
R₄ is C₈-C₁₈ alkyl or C₈-C₁₂ alkyl;
the emulsifier comprises one or more of anionic surfactant, nonionic surfactant, and protective colloid. In the present application, when the anionic surfactant and the nonionic surfactant are used in combination, the two types of surfactant molecules are alternately adsorbed on the surface of the latex particles, with the nonionic surfactant molecules "wedged" between the anionic surfactant molecules. On one hand, this increases the distance between surfactant molecules on the surface of the latex particles; on the other hand, due to the electrostatic shielding effect of the nonionic surfactant, the electrostatic tension on the surface of the latex particles is significantly reduced, enhancing the adsorption strength of the emulsifier on the latex particles, thereby improving the stability of the polymer latex. Simultaneously, the stability of the emulsion provided by the ionic surfactant mainly relies on electrostatic repulsion, whereas the stability provided by the nonionic surfactant mainly relies on hydration. When the two emulsifiers are used in combination, they impart significant electrostatic repulsion between the latex particles while also forming a thick hydration layer on the particle surfaces. The dual action of these effects results in the emulsion with high stability.

In the present disclosure, the protective colloid molecules are adsorbed on the surface of the latex particles, forming a hydration layer of a certain thickness, which can prevent the latex particles from colliding with each other and coalescing. At the same time, as the protective colloid is soluble in the aqueous phase, it increases the viscosity of the system, which also increases the resistance to coalescence between latex particles, further making the emulsion more stable.

In a preferred embodiment of the aqueous emulsion antioxidant, it is prepared from raw materials comprising: 10 to 70 parts by weight of oil-soluble antioxidant, 3 to 30 parts by weight of emulsifier, 0.001 to 1 part by weight of defoaming agent, and 30 to 70 parts by weight of water.

In a preferred embodiment of the aqueous emulsion antioxidant, the compound represented by Formula I comprises at least one of the compounds represented by Formula Ia to Formula Ig;
the structural formula of the compound represented by Formula Ia is: 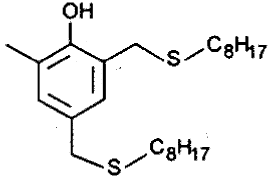
the structural formula of the compound represented by Formula Ib is: 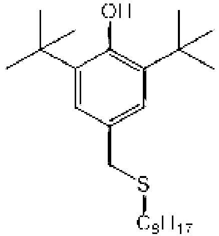
the structural formula of the compound represented by Formula Ic is: 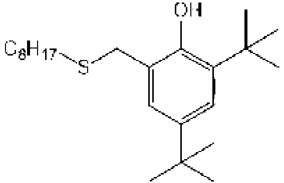
the structural formula of the compound represented by Formula Id is: 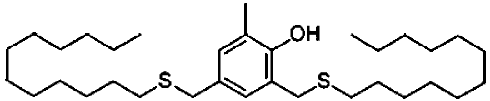
the structural formula of the compound represented by Formula Ie is: 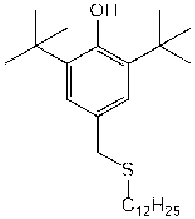
the structural formula of the compound represented by Formula If is: 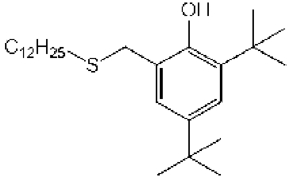
the structural formula of the compound represented by Formula Ig is: 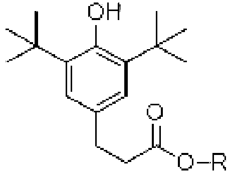
wherein: R is at least one of C₇-C₁₈ alkyl, preferably, R is at least one of C₇-C₉ alkyl and C₁₂-C₁₈ alkyl.

According to some embodiments of the aqueous emulsion antioxidant of the present application, the oil-soluble antioxidant is C₇-C₉ alkyl esters of 3,5-di-tert-butyl-4-hydroxy benzenepropanoic acid.

According to some embodiments of the aqueous emulsion antioxidant of the present application, the oil-soluble antioxidant is C₁₃-C₁₅ branched and linear alkyl ester of 3,5-bis(1,1-dimethylethyl)-4-hydroxybenzenepropanoic acid.

According to some embodiments of the aqueous emulsion antioxidant of the present application, the oil-soluble antioxidant is 4,6-bis(octylthiomethyl)-o-cresol.

According to some embodiments of the aqueous emulsion antioxidant of the present application, the oil-soluble antioxidant is 2,4-di-tert-butyl-6-n-octylthiomethylenephenol.

According to some embodiments of the aqueous emulsion antioxidant of the present application, the emulsifier comprises or consists of an anionic surfactant, a nonionic surfactant, and a protective colloid; or the emulsifier comprises or consists of an anionic surfactant and a nonionic surfactant.

According to some embodiments of the aqueous emulsion antioxidant of the present application, the emulsifier comprises or consists of anionic carboxylates, anionic sulfates, nonionic ethers, and a protective colloid.

According to some embodiments of the aqueous emulsion antioxidant of the present application, the emulsifier comprises or consists of anionic sulfates and nonionic higher fatty alcohols.

According to some embodiments of the aqueous emulsion antioxidant of the present application, the anionic surfactant includes at least one of carboxylate surfactants, sulfate surfactants, sulfonate surfactants, and phosphate ester surfactants.

According to some embodiments of the aqueous emulsion antioxidant of the present application, the carboxylate surfactant is fatty alcohol polyoxyethylene ether carboxylate, oleate soap, ricinoleate soap, rosin acid soap, fatty acid soap, or tall oil soap.

According to some embodiments of the aqueous emulsion antioxidant of the present application, the sulfate surfactant is polyoxyethylene alkylphenol ether sulfate, fatty alcohol polyoxyethylene ether sulfate, or aralkylphenol polyoxyethylene ether sulfate.

According to some embodiments of the aqueous emulsion antioxidant of the present application, the sulfonate surfactant is alkyl sulfonate, alkylbenzene sulfonate, alkylnaphthalene sulfonate, alkyl succinate sulfonate, disodium sulfosuccinate mixture, fatty acid amide taurate, polyoxyethylene alkoxy ether sulfonate, or fatty acid amide sarcosinate.

According to some embodiments of the aqueous emulsion antioxidant of the present application, the phosphate ester surfactant is fatty acid polyoxyethylene ether phosphate, polyoxyethylene alkylphenol ether phosphate, or alkyl polyoxyethylene ether phosphite monoester and diester.

The nonionic surfactant is at least one of esters, ethers, or higher fatty alcohols.

According to some embodiments of the aqueous emulsion antioxidant of the present application, the ester is polyoxyethylene carboxylic acid ester, polyhydric alcohol carboxylic acid ester, or polyoxyethylene polyhydric alcohol carboxylic acid ester.

According to some embodiments of the aqueous emulsion antioxidant of the present application, the ether is polyoxyethylene alkylaryl ether, polyoxyethylene alkyl ether or fatty alcohol polyoxyethylene ether, condensation product of fatty alcohol and ethylene oxide.

According to some embodiments of the aqueous emulsion antioxidant of the present application, the higher fatty alcohol is cetyl alcohol, stearyl alcohol, C₁₆-C₁₇ branched fatty alcohol, or polyoxyethylene stearyl alcohol.

According to some embodiments of the aqueous emulsion antioxidant of the present application, the protective colloid is at least one of polyvinyl alcohol, sodium polymethacrylate, polyethylene glycol, polyvinylpyrrolidone, hydroxyethyl cellulose, hydroxymethyl cellulose, xanthan gum, gelatin, and gum arabic.

According to some embodiments of the aqueous emulsion antioxidant of the present application, the emulsifier comprises potassium ricinoleate soap, sodium fatty alcohol polyoxyethylene ether sulfate, fatty alcohol polyoxyethylene ether, and xanthan gum. Said emulsifier is particularly suitable for the oily antioxidants of formulas Ia, Ib, Ic, Id, and If.

According to some embodiments of the aqueous emulsion antioxidant of the present application, the emulsifier comprises cetyl alcohol/stearyl alcohol/C₁₆-C₁₇ branched fatty alcohol/polyoxyethylene stearyl alcohol, and sodium dodecyl sulfonate. Said emulsifier is particularly suitable for the oily antioxidants of formulas Ia, Ib, Ic, Id, and If.

According to some embodiments of the aqueous emulsion antioxidant of the present application, the defoaming agent is at least one of silicone oil, higher alcohol fatty acid ester complex, polyoxyethylene polyoxypropylene pentaerythritol ether, polyoxyethylene polyoxypropylene amine ether, polyoxypropylene glycerol ether, and polyoxypropylene.

In a second aspect, the present disclosure provides a method for preparing an aqueous emulsion antioxidant, said method is a phase transfer method or an ultrasonic dispersion method;
preferably, the phase transfer method comprises the following steps:
   (1) adding an emulsifier to an oil-soluble antioxidant that is being heated and kept warm, to obtain a mixture system;
   (2) adding water, preferably, deionized water, to the mixture system obtained in step (1), and after the addition is complete, performing heat preservation and cooling treatments, then adding a defoaming agent, and discharging the product to obtain the high-efficiency aqueous emulsion antioxidant;
more preferably, the ultrasonic dispersion method comprises the following steps:
   a. heating an oil-soluble antioxidant, adding an emulsifier, and mixing uniformly;
   b. adding water, preferably, deionized water, to the mixture system obtained in step a, and mixing uniformly to obtain an aqueous antioxidant system;
   c. subjecting the aqueous antioxidant system obtained in step b to ultrasonic dispersion, then cooling, followed by adding a defoaming agent, and discharging the product to obtain the high-efficiency aqueous emulsion antioxidant.

According to some embodiments of the preparation method of the present application, in step (1), the emulsifier is added to the oil-soluble antioxidant that is being heated and kept warm at a temperature of 50 to 180°C, and stirred at a stirring speed of 30 to 600 rpm for 10 to 60 min; preferably, the emulsifier includes anionic surfactant, nonionic surfactant, and protective colloid.

According to some embodiments of the preparation method of the present application, in step (2), deionized water is added dropwise to the mixture system obtained in step (1) under conditions of a stirring temperature of 50 to 100°C and a stirring speed of 300 to 3,000 rpm, and after the system becomes thin and yogurt-like, the stirring speed is reduced to 30 to 600 rpm.

After the addition of deionized water is complete, the mixture is kept warm for 30 min to 60 min, cooled to a temperature below 50°C, followed by adding the defoaming agent and discharging the product.

According to some embodiments of the preparation method of the present application, in step a, the oil-soluble antioxidant is heated to 30 to 70°C.

According to some embodiments of the preparation method of the present application, the emulsifier includes the anionic surfactant and the nonionic surfactant.

According to some embodiments of the preparation method of the present application, in step c, the temperature for ultrasonic dispersion is controlled below 80°C, and the ultrasonic dispersion time is 30 min; the ultrasonically dispersed system is cooled to below 50°C under a stirring speed of 300 rpm, the defoaming agent is added, and the product is discharged.

When the phase transfer method is used for preparing the aqueous emulsion antioxidant, the combination of anionic carboxylates + anionic sulfates + nonionic ethers + protective colloid is optimal for the emulsifier.

When the ultrasonic dispersion method is used for preparing the aqueous emulsion antioxidant, the combination of anionic sulfates + nonionic higher fatty alcohols is optimal for the emulsifier.

In a third aspect, the present application provides a polymer material comprising the aqueous emulsion antioxidant according to the first aspect of the present application or the aqueous emulsion antioxidant prepared by the preparation method according to the second aspect of the present application.

According to some embodiments of the polymer material of the present application, the polymer material is rubber and latex, specifically may be selected from one or more of natural latex, nitrile latex, styrene-butadiene latex, styrene-butadiene-pyridine latex, neoprene latex, isoprene latex, natural latex, emulsion-polymerized styrene-butadiene rubber, nitrile rubber, chloroprene rubber, ABS, ASA, MBS, polymethacrylates and copolymers thereof, polyvinyl chloride, polyvinyl acetate and copolymers thereof, and polytetrafluoroethylene.

The beneficial effects of the present disclosure are: the high-efficiency aqueous emulsion antioxidant of the present disclosure utilizes the synergistic effect of the emulsifier to achieve good compatibility with emulsion-polymerized polymers, good anti-aging performance, and high effective utilization rate of the emulsion antioxidant, high stability, and long-term storability.

The high-efficiency aqueous emulsion antioxidant of the present disclosure is an environmentally friendly aqueous product, which avoids dust pollution and explosion risks associated with direct addition of solid antioxidants, and also avoids the problem of poor compatibility of traditional liquid antioxidants with emulsion-polymerized polymer systems, thereby improving resource utilization.

### Brief Description of the Drawings

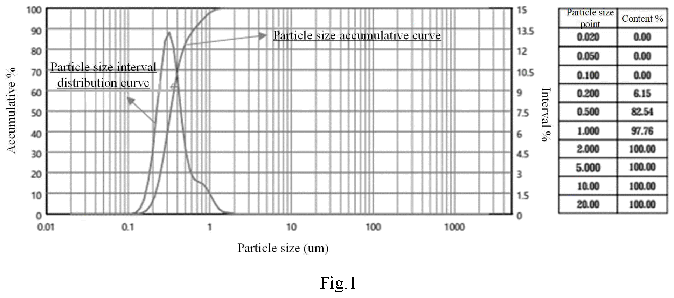

Figure 1 is a particle size diagram of the aqueous emulsion antioxidant obtained in Example 2 of the present application.

### Detailed Description of the Embodiments

To make the objectives, technical solutions, and advantages of the present disclosure clearer, the present disclosure is further described in detail below with reference to the examples and the accompanying drawings. The specific embodiments described herein are intended solely to explain the present disclosure and do not intended to limit the present disclosure in any way. Furthermore, in the following description, descriptions of well-known structures and techniques are omitted to avoid unnecessarily obscuring the concepts of the present disclosure. Such structures and techniques are also described in many publications.

Sources of some raw materials used in the embodiments of the present disclosure are as follows:
3,5-di-tert-butyl-4-hydroxy benzenepropanoic acid C7-C9 alkyl esters (RIANOX 1135): Rianlon Corporation, CAS No.: 125643-61-0;
Potassium ricinoleate soap: Rianlon Corporation, CAS No.: 8013-05-6;
Sodium fatty alcohol polyoxyethylene ether sulfate: Zanyu Technology Group Co., Ltd., CAS No.: 9004-82-4;
Fatty alcohol polyoxyethylene ether: Suzhou Yuantairun Chemical Co., Ltd., CAS No.: 52292-17-8; Xanthan gum: Hubei Qifei Pharmaceutical Chemical Co., Ltd., CAS No.: 11138-66-2;
Polyoxyethylene polyoxypropanolamine ether: Hubei Chengfeng Chemical Co., Ltd.;
3,5-Bis(1,1-dimethylethyl)-4-hydroxybenzenepropanoic acid C₁₃-C₁₅ branched and linear alkyl esters (RIANOX 1315): Rianlon Corporation, CAS No.: 171090-93-0;
Stearyl alcohol: Shanghai Better Chemical Co., Ltd., CAS No.: 112-92-5;
Sodium dodecyl sulfate: Jinan Daorong Chemical Co., Ltd., CAS No.: 151-21-3;
Polyoxypropylene glycerol ether: Jining Tangyi Chemical Co., Ltd., CAS No.: 25791-96-2;
4,6-Bis(octylthiomethyl)-o-cresol (RIANOX 1520): Rianlon Corporation, CAS No.: 110553-27-0.

### Example 1

An aqueous emulsion antioxidant comprising the following raw materials in parts by weight: oil-soluble antioxidant, emulsifier, defoaming agent, and deionized water;
oil-soluble antioxidant: 50 parts by weight of 3,5-di-tert-butyl-4-hydroxy benzenepropanoic acid C₇-C₉ alkyl esters (RIANOX 1135);
emulsifier: 3 parts by weight of potassium ricinoleate soap, 3 parts by weight of sodium fatty alcohol polyoxyethylene ether sulfate, 2 parts by weight of fatty alcohol polyoxyethylene ether, and 1 part by weight of xanthan gum;
defoaming agent: 1 part by weight of polyoxyethylene polyoxypropanolamine ether;
was prepared by the phase transfer method, comprising the following steps:
   (1) 50 parts by weight of the oil-soluble antioxidant, 3,5-di-tert-butyl-4-hydroxy benzenepropanoic acid C7-C9 alkyl esters (RIANOX 1135), were added into a reaction kettle, heated to maintain the temperature at 70°C, and low-speed stirring was started at 30 to 600 rpm to mix uniformly;
   (2) 3 parts by weight of potassium ricinoleate soap, 3 parts by weight of sodium fatty alcohol polyoxyethylene ether sulfate, 2 parts by weight of fatty alcohol polyoxyethylene ether and 1 part by weight of xanthan gum were added into the reaction kettle, and stirring was maintained at 600 rpm to mix with the antioxidant uniformly for 10-60 min;
   (3) with high-speed stirring at 3,000 rpm and at 70°C, 40 parts by weight of deionized water were added dropwise to the reaction kettle, and the stirring speed was reduced to 600 rpm after the aqueous system became thinner;
   (4) after the water addition, the aqueous emulsion was kept warm for 30 min, then cooled to below 50°C, 1 part by weight of the defoaming agent polyoxyethylene polyoxypropanolamine ether was added, and the product was discharged to obtain the high-stability, high-efficiency aqueous emulsion antioxidant.

### Example 2

An aqueous emulsion antioxidant comprising the following raw materials in parts by weight: oil-soluble antioxidant, emulsifier, defoaming agent, and deionized water;
oil-soluble antioxidant: 50 parts by weight of 3,5-bis(1,1-dimethylethyl)-4-hydroxybenzenepropanoic acid C₁₃-C₁₅ branched and linear alkyl esters (RIANOX 1315);
emulsifier: 1 part by weight of stearyl alcohol, and 2 parts by weight of sodium dodecyl sulfate;
defoaming agent: 0.001 part by weight of polyoxypropylene glycerol ether;
was prepared by the ultrasonic dispersion method, comprising the following steps:
   a. 50 parts by weight of the oil-soluble antioxidant, 3,5-Bis(1,1-dimethylethyl)-4-hydroxybenzenepropanoic acid C₁₃-C₁₅ branched and linear alkyl esters (RIANOX 1315), were added into a reaction kettle, and heated to 50°C;
   b. 1 part by weight of stearyl alcohol and 2 parts by weight of sodium dodecyl sulfate were added into the reaction kettle, stirred uniformly, then 47 parts by weight of deionized water were added, and stirring was continued for 30 min;
   c. then the aqueous antioxidant system was placed in an ultrasonic disperser and ultrasonically dispersed for 30 min while the temperature was maintained below 80°C;
   d. the ultrasonically dispersed aqueous antioxidant was cooled under a stirring speed of 300 rpm to below 50°C, the defoaming agent was added, and the product was discharged to obtain the high-stability aqueous emulsion antioxidant.

### Example 3

An aqueous emulsion antioxidant was prepared in the same manner as Example 1, except that the oil-soluble antioxidant used was 4,6-bis(octylthiomethyl)-o-cresol (RIANOX 1520).

### Example 4

An aqueous emulsion antioxidant was prepared in the same manner as Example 2, except that the oil-soluble antioxidant used was 2,4-di-tert-butyl-6-n-octylthiomethylenephenol.

### Example 5

An aqueous emulsion antioxidant was prepared in the same manner as Example 2, except that the oil-soluble antioxidant used was 4,6-bis(octylthiomethyl)-o-cresol (RIANOX 1520).

### Comparative Example 1

An aqueous emulsion antioxidant was prepared in the same manner as Example 1, except that the emulsifier used was 2 parts by weight of gum arabic (nonionic emulsifier), 5 parts by weight of stearic acid (anionic surfactant), and 1 part by weight of xanthan gum.

### Comparative Example 2

An aqueous emulsion antioxidant was prepared in the same manner as Example 2, except that the emulsifier used was 2 parts by weight of N-dodecyldimethylamine (cationic surfactant) and 1 part by weight of cetyl alcohol.

### Comparative Example 3

An aqueous emulsion antioxidant was prepared in the same manner as Example 1, except that the oil-soluble antioxidant used was bis(3,5-di-tert-butyl-4-hydroxyphenylpropionyl)hydrazine.

### Comparative Example 4

An aqueous emulsion antioxidant was prepared in the same manner as Example 2, except that the oil-soluble antioxidant used was distearyl pentaerythritol diphosphite.

### Performance evaluation of the aqueous emulsion antioxidant of the present application:

The test methods were as follows:
1. Volume average particle size: a Bettersize2600 laser particle size analyzer was used to measure the particle size of the aqueous emulsion antioxidant;
2. Centrifugal stability: the emulsion was centrifuged at 5,000 rpm for 30 min, and it was observed whether any clear liquid or sediment appeared in the emulsion;
3. Storage stability: the emulsion was allowed to stand at room temperature, and it was observed whether any clear liquid or sediment appeared in the emulsion;
4. Anti-aging performance: A certain amount of the emulsion antioxidant was added to a styrene-butadiene latex, mixed uniformly. The mixed latex was prepared into a film, aged at 150°C for 3 hours, and the yellowness index (YI) of the film was tested.

The test results are shown in Table 1:

**Table 1**

| Test item | Volume average particle size | Centrifugal stability | Storage stability | Anti-aging performance (YI) |
|---|---|---|---|---|
| Example 1 | 811 nm | No clear liquid, no sediment | 2 years | 8.30 |
| Example 2 | 523 nm | No clear liquid, no sediment | 2 years | 7.46 |
| Example 3 | 389 nm | No clear liquid, no sediment | 2 years | 4.45 |
| Example 4 | 396 nm | No clear liquid, no sediment | 2 years | 4.63 |
| Example 5 | 381 nm | No clear liquid, no sediment | 2 years | 4.44 |
| Comparative Example 1 | 1029 nm | Clear liquid and sediment observed | 5 days | 33.66 |
| Comparative Example 2 | 1283 nm | Clear liquid and sediment observed | 3 days | 39.89 |
| Comparative Example 3 | 1635 nm | Clear liquid and sediment observed | 4 days | 50.65 |
| Comparative Example 4 | 1772 nm | Clear liquid and sediment observed | 1 day | 41.32 |

It can be seen from Table 1: The high-efficiency aqueous emulsion antioxidants of the present application have small particle size, high stability, and very good anti-aging performance. For Comparative Examples 1 and 2, because the types and combinations of emulsifiers used were not within the scope of the present application, the emulsion particle sizes were significantly larger, the centrifugal stability and storage stability of the emulsions were very low, and the anti-aging performance was also poor due to the influence of particle size and stability. For Comparative Examples 3 and 4, due to the selection of other oil-soluble antioxidants, the emulsion particle sizes were larger, the emulsion stability was lower, and the anti-aging performance was significantly poorer. The preferred embodiments of the present disclosure are described in detail above, but the present disclosure is not limited thereto. Within the scope of the technical concept of the present disclosure, various simple modifications can be made to the technical solutions of the present disclosure, including combining various technical features in any other suitable manner. These simple modifications and combinations should also be considered as the disclosed content of the present application and fall within the protection scope of the present application.

## Claims

1. An aqueous emulsion antioxidant, comprising oil-soluble antioxidant, emulsifier, defoaming agent, and water;
the oil-soluble antioxidant comprises at least one compound represented by Formula I, 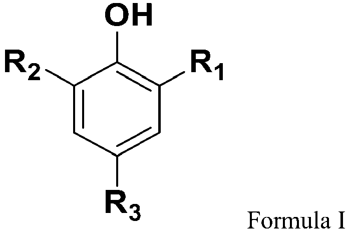 wherein:
R₁ is C₁-C₄ alkyl;
R₂ and R₃ are each independently selected from one of C₁-C₄ alkyl, -CH₂-S-R₄, or -CH₂-CH₂-COO-R₄;
R₄ is C₈-C₁₈ alkyl or C₈-C₁₂ alkyl;
the emulsifier comprises one or more of anionic surfactant, nonionic surfactant, and protective colloid.

2. The aqueous emulsion antioxidant according to claim 1, **characterized in that** the aqueous emulsion antioxidant is prepared from raw materials comprising: 10 to 70 parts by weight of the oil-soluble antioxidant, 3 to 30 parts by weight of the emulsifier, 0.001 to 1 part by weight of the defoaming agent, and 30 to 70 parts by weight of water.

3. The aqueous emulsion antioxidant according to claim 1, **characterized in that** the compound represented by Formula I comprises at least one of the compounds represented by Formula Ia to Formula Ig;
the structural formula of the compound represented by Formula Ia is: 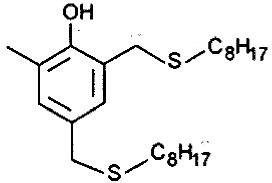
the structural formula of the compound represented by Formula Ib is: 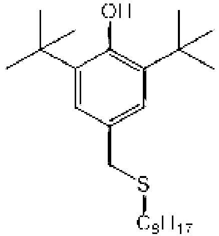
the structural formula of the compound represented by Formula Ic is: 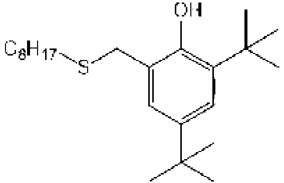
the structural formula of the compound represented by Formula Id is: 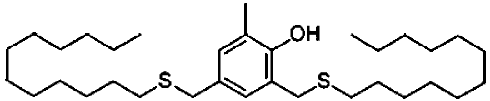
the structural formula of the compound represented by Formula Ie is: 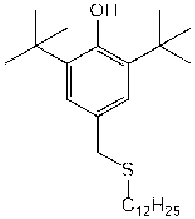
the structural formula of the compound represented by Formula If is: 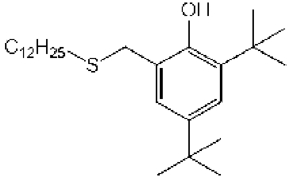
the structural formula of the compound represented by Formula Ig is: 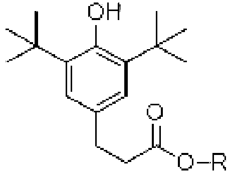
wherein: R is at least one of C₇-C₁₈ alkyl, preferably, R is at least one of C₇-C₉ alkyl and C₁₂-C₁₈ alkyl;
preferably, the oil-soluble antioxidant is C₇-C₉ alkyl esters of 3,5-di-tert-butyl-4-hydroxy benzenepropanoic acid;
preferably, the oil-soluble antioxidant is C₁₃-C₁₅ branched and linear alkyl ester of 3,5-bis(1,1-dimethylethyl)-4-hydroxybenzenepropanoic acid;
preferably, the oil-soluble antioxidant is 4,6-bis(octylthiomethyl)-o-cresol; and
preferably, the oil-soluble antioxidant is 2,4-di-tert-butyl-6-n-octylthiomethylenephenol.

4. The aqueous emulsion antioxidant according to claim 1, **characterized in that**,
the emulsifier comprises or consists of the anionic surfactant, the nonionic surfactant, and the protective colloid; or the emulsifier comprises or consists of the anionic surfactant and the nonionic surfactant;
preferably, the emulsifier comprises or consists of anionic carboxylates, anionic sulfates, nonionic ethers, and the protective colloid; and
preferably, the emulsifier comprises or consists of anionic sulfates and nonionic higher fatty alcohols.

5. The aqueous emulsion antioxidant according to claim 4, **characterized in that**,
the anionic surfactant comprises at least one of carboxylate surfactants, sulfate surfactants, sulfonate surfactants, and phosphate ester surfactants;
preferably, the carboxylate surfactant is fatty alcohol polyoxyethylene ether carboxylate, oleate soap, ricinoleate soap, rosin acid soap, fatty acid soap, or tall oil soap;
more preferably, the sulfate surfactant is polyoxyethylene alkylphenol ether sulfate, fatty alcohol polyoxyethylene ether sulfate, or aralkylphenol polyoxyethylene ether sulfate;
further preferably, the sulfonate surfactant is alkyl sulfonate, alkylbenzene sulfonate, alkylnaphthalene sulfonate, alkyl succinate sulfonate, disodium sulfosuccinate mixture, fatty acid amide taurate, polyoxyethylene alkoxy ether sulfonate, or fatty acid amide sarcosinate;
even further preferably, the phosphate ester surfactant is fatty acid polyoxyethylene ether phosphate, polyoxyethylene alkylphenol ether phosphate, or alkyl polyoxyethylene ether phosphite monoester and diester;
the nonionic surfactant is at least one of esters, ethers, or higher fatty alcohols;
preferably, the ester is polyoxyethylene carboxylic acid ester, polyhydric alcohol carboxylic acid ester, or polyoxyethylene polyhydric alcohol carboxylic acid ester;
more preferably, the ether is polyoxyethylene alkylaryl ether, polyoxyethylene alkyl ether or fatty alcohol polyoxyethylene ether, condensation product of fatty alcohol and ethylene oxide;
further preferably, the higher fatty alcohol is cetyl alcohol, stearyl alcohol, C₁₆-C₁₇ branched fatty alcohol, or polyoxyethylene stearyl alcohol.

6. The aqueous emulsion antioxidant according to claim 4, **characterized in that**, the protective colloid is at least one of polyvinyl alcohol, sodium polymethacrylate, polyethylene glycol, polyvinylpyrrolidone, hydroxyethyl cellulose, hydroxymethyl cellulose, xanthan gum, gelatin, and gum arabic;
the defoaming agent is at least one of silicone oil, higher alcohol fatty acid ester complex, polyoxyethylene polyoxypropylene pentaerythritol ether, polyoxyethylene polyoxypropylene amine ether, polyoxypropylene glycerol ether, and polyoxypropylene.

7. A method for preparing an aqueous emulsion antioxidant, **characterized in that** the method is a phase transfer method or an ultrasonic dispersion method;
preferably, the phase transfer method comprises the following steps:
(1) adding an emulsifier to an oil-soluble antioxidant that is being heated and kept warm, to obtain a mixture system;
(2) adding water to the mixture system obtained in step (1), and after the addition is complete, performing heat preservation and cooling treatments, then adding a defoaming agent and a protective colloid, and discharging the product to obtain the aqueous emulsion antioxidant;
more preferably, the ultrasonic dispersion method comprises the following steps:
a. heating an oil-soluble antioxidant, adding an emulsifier, and mixing uniformly;
b. adding water to the mixture system obtained in step a, to obtain an aqueous antioxidant system;
c. subjecting the aqueous antioxidant system obtained in step b to ultrasonic dispersion, then cooling, followed by adding a defoaming agent, and discharging the product to obtain the aqueous emulsion antioxidant.

8. The method according to claim 7, **characterized in that**,
in step (1), the emulsifier is added to the oil-soluble antioxidant that is being heated and kept warm at a temperature of 50 to 180°C, and stirred at a stirring speed of 30 to 600 rpm for 10 to 60 min; preferably, the emulsifier includes anionic surfactant, nonionic surfactant, and protective colloid;
preferably, in step (2), a deionized water is added dropwise to the mixture system obtained in step (1) under conditions of a stirring temperature of 50 to 100°C and a stirring speed of 300 to 3,000 rpm, and the stirring speed is reduced to 30 to 600 rpm;
after the addition of deionized water is complete, the mixture is kept warm, then cooled to a temperature below 50°C, followed by adding the defoaming agent and the protective colloid and discharging the product .

9. The method according to claim 7, **characterized in that**,
in step a, the oil-soluble antioxidant is heated to 30 to 70°C;
preferably, the emulsifier includes anionic surfactant and nonionic surfactant;
preferably, in step c, the ultrasonically dispersed system is stirred for 30 min under a stirring temperature of 50 to 70°C, then cooled to below 50°C, added with the defoaming agent to discharge the product.

10. A polymer material, **characterized by** comprising the aqueous emulsion antioxidant according to any one of claims 1 to 6 or the aqueous emulsion antioxidant prepared by the method according to any one of claims 7 to 9;
preferably, the polymer material is rubber or latex, more preferably, the polymer material is selected from one or more of natural latex, nitrile latex, styrene-butadiene latex, styrene-butadiene-pyridine latex, neoprene latex, isoprene latex, natural latex, emulsion-polymerized styrene-butadiene rubber, nitrile rubber, chloroprene rubber, ABS, ASA, MBS, polymethacrylates and copolymers thereof, polyvinyl chloride, polyvinyl acetate and copolymers thereof, and polytetrafluoroethylene.
